Europäisches Patentamt

European Patent Office

Office européen des brevets

(11) Publication number: **0 285 244**
**B1**

(12) **EUROPEAN PATENT SPECIFICATION**

(45) Date of publication of patent specification: **23.01.91**

(21) Application number: **88301254.4**

(22) Date of filing: **16.02.88**

(51) Int. Cl.⁵: **F 16 D 27/10**

�=== ⑤④ **Electromagnetically controlled spring clutch mechanism.**

(30) Priority: **30.03.87 JP 74268/87**

(43) Date of publication of application:
**05.10.88 Bulletin 88/40**

(45) Publication of the grant of the patent:
**23.01.91 Bulletin 91/04**

(84) Designated Contracting States:
**DE FR GB NL**

(56) References cited:
**EP-A-0 202 030**
**DE-B-2 640 744**
**US-A-1 909 420**
**US-A-2 046 439**

(73) Proprietor: **MITA INDUSTRIAL CO. LTD.**
**2-28, 1-chome, Tamatsukuri Higashi-ku**
**Osaka 540 (JP)**

(72) Inventor: **Nishimura, Kozo**
**1264-10 Okubo Okubo-cho**
**Akashi-shi Hyogo-ken (JP)**

(74) Representative: **Huntingford, David Ian et al**
**W.P. THOMPSON & CO. Coopers Building**
**Church Street**
**Liverpool L1 3AB (GB)**

Courier Press, Leamington Spa, England.

## Description

This invention relates to an electromagnetically controlled spring clutch mechanism of the type comprising a rotatably mounted output rotating element, an input rotating element rotatable relative to the output rotating element, and a transmission means in the form of a coil spring means adapted to selectively connect the output and input rotating elements under the control of an electromagnetic means which is adapted to produce a difference in rotating speed between one and the other end of the coil spring means.

An electromagnetically controlled spring clutch mechanism utilizing a coil spring has long been used to transmit selectively the driving force of an input rotating element in rotation. One example of this type of electromagnetically controlled spring clutch mechanism is disclosed, for example, in JP—A—59-175633. It comprises a shaft member, an input rotating element adapted to rotate as a unit with the shaft member, an output rotating element mounted rotatably on the shaft member, a rotor adapted to rotate as a unit with the shaft member, an armature assembly disposed on one side of the rotor and including an armature positioned opposite to the rotor, a supporting member mounted rotatably on the shaft member and a biasing spring member for biasing the armature in a direction away from the rotor, electromagnetic means for magnetically attracting the armature to the rotor against the resilient biasing action of the biasing spring member, and coil spring means having one end linked to the armature assembly and the other end linked to the output rotating element. When the electromagnetic means in this clutch mechanism is in the de-energized state, the driving force of the input rotating element is not transmitted to the output rotating element. When the electromagnetic means is energized, the armature and the output rotating element are rotated relative to each other whereby the coil spring means contracts and the driving force of the input rotating element is transmitted to the output rotating element.

There is also known (from our prior European Patent Application EP—A—0202030) an electromagnetically controlled clutch mechanism comprising a rotatably mounted shaft member, an input rotary element mounted on the shaft member, a rotor adapted to rotate as a unit with the shaft member, an armature located opposite to one surface of the rotor, a supporting member rotatably mounted on the shaft member, a biasing spring member disposed between the supporting member and the armature for resiliently biasing the armature away from said one surface of the rotor, an electromagnetic means disposed on the other side of the rotor and adapted when energized to attract the armature magnetically to said one surface of the rotor against the resilient biasing action of the biasing spring member, and a coil spring member having one end connected to the supporting member, said clutch mechanism being adapted to transmit the driving force of the input rotary element by the contraction of the coil spring member.

The aforesaid conventional electromagnetically controlled spring clutch mechanisms are adapted to selectively transmit the driving force of the input rotating element driven in a predetermined direction to the output rotating element, and cannot be used to transmit the driving force of the input rotating element driven in a direction opposite to the predetermined direction to the output rotating element. It has been desired therefore to develop an electromagnetically controlled spring clutch mechanism for transmitting the aforesaid driving forces of the input rotating element which are driven in both directions to the output rotating element.

It is a main object of this invention to provide an electromagnetically controlled spring clutch mechanism which can transmit the driving forces of an input rotating element, driven in a predetermined direction and in a direction opposite thereto, to an output rotating element.

Another object of this invention is to provide an electromagnetically controlled spring clutch mechanism which is relatively small-sized and can properly transmit the driving forces of an input rotating element to an output rotating element with a simple structure.

According to this invention, there is provided an electromagnetically controlled spring clutch mechanism comprising

a rotatably mounted output rotating element,

an input rotating element rotatable relative to the output rotating element and adapted to rotate in a predetermined direction and in a direction opposite to the predetermined direction,

inside transmission means and outside transmission means interposed between the input rotating element and the output rotating element,

the inside transmission means comprising a first inside member adapted to rotate as a unit with the input rotating element and a second inside member adapted to rotate as a unit with the output rotating element,

the outside transmission means comprising a first outside member adapted to rotate as a unit with the input rotating element and a second outside member adapted to rotate as a unit with the outside rotating element,

coil spring means disposed between the inside transmission means and the outside transmission means and extending astride the first and second inside members of the inside transmission means outwardly of the outer circumferential surfaces of the first and second inside members and astride the first and second outside members of the outside transmission means inwardly of the inner circumferential surfaces of the first and second outside members, and

electromagnetic means for producing a difference in rotating speed between one and the other end of the coil spring means; wherein

when the magnetic means is energized during the rotation of the input rotating element in said predetermined direction, a difference in rotating speed in a direction to contract the coil spring means is created between one end and other end of the coil spring means to connect the first and second inside members drivingly via a coil spring means and thereby transmit the rotating force of the input rotating element in said predetermined direction to the output rotating element via the inside transmission means, and

when the electromagnetic means is energized during rotation of the input rotating element in said opposite direction, a difference in rotating speed is created between the one and the other end of the coil spring means in a direction to expand the coil spring means to connect the first and second outside members drivingly via the coil spring means and thereby transmit the rotating force of the input rotating element in said opposite direction to the output rotating element via the outside transmission means.

The invention is described further hereinafter, by way of example only, with reference to the accompanying drawings, in which:

Figure 1 is a sectional view showing one embodiment of an electromagnetically controlled spring clutch mechanism constructed in accordance with this invention; and

Figure 2 is a perspective view of the embodiment shown in Figure 1 in the exploded state.

With reference to the accompanying drawings, one embodiment of the electromagnetically controlled spring clutch mechanism constructed in accordance with this invention will be described in detail.

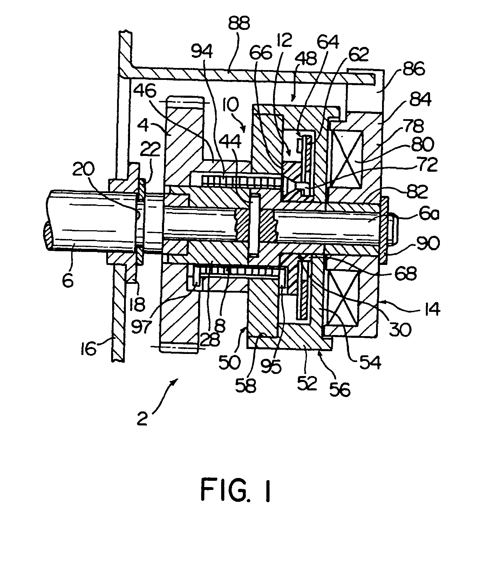

With reference to Figure 1, an electromagnetically controlled spring clutch mechanism shown generally at 2 is provided with a gear 4 constituting an input rotating element, a shaft member 6 constituting an output rotating element, inside transmission means 8 and outside transmission means 10 interposed between the gear 4 and the shaft member 6, an armature assembly 12 and electromagnetic means 14.

The shaft member 6 is rotatably supported between a pair of supporting plates 16 (one of which is shown in Figure 1) via a bearing member 18. One end portion of the shaft member 6 projects outwardly through the supporting plate 16, and part of the projecting portion has a slightly smaller diameter. In the illustrated embodiment, an engaging groove 20 is formed in the projecting portion of the shaft member 6, and an engaging member 22 for preventing detachment of the bearing member 18 is engaged with the engaging groove 20.

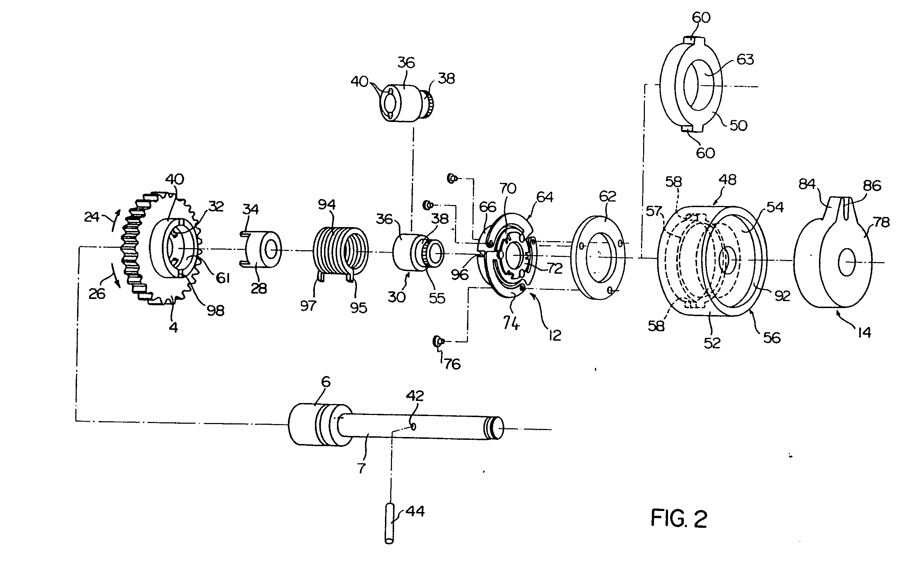

The gear 4 is rotatably mounted on the inside end portion of a small-diameter part 7 formed in the aforesaid projecting portion of the shaft member 6. The gear 4 is selectively rotated in a predetermined direction shown by an arrow 24 and in a direction shown by an arrow 26 which is opposite to the predetermined direction by the action of a driving source (not shown), as shown in Figure 2.

With reference also to Figure 2, the inside transmission means 8 has a first inside member 28 and a second inside member 30. The first inside member 28 is formed of a cylindrical material and mounted so as to rotate as a unit with the gear 4 by inserting its protruding portion 34 provided in its end surface into a through-hole 32 formed in the side surface of the gear 4. The first inside member 28 extends to the right in Figures 1 and 2. The first inside member 28 may be formed integrally with the gear 4. The second inside member 30 has a large-diameter portion 36 formed in the left part in Figures 1 and 2 and a small-diameter portion 38 provided in the right part. A pair of recesses 40 defining a pin receiving portion are formed in the large-diameter portion 36 of the second inside member 30, and the second inside member 30 is mounted on the small-diameter portion 7 of the shaft member 6 by bringing both end portions of a pin member 44 fitted in a pin hole 42 (Figure 2) in the small-diameter portion 7 into engagement with the recesses 40 (Figure 1). The large-diameter portion 36 of the second inside member 30 extends toward the first inside member 28 to the left in Figures 1 and 2, and the end surfaces of the two inside members are kept in contact or in proximity with each other. The outside diameter of the first inside member 28 is substantially equal to the outside diameter of the large-diameter portion 36 of the second inside member 30. If desired, the second inside member 30 may be formed as a unit with the shaft member 6.

The outside transmission means 10 has a first outside member 46 and a second outside member 48. The first outside member 46 is formed of an annular boss portion disposed outwardly of the first inside member 28, and provided integrally on one surface of the gear 4 (the right surface in Figures 1 and 2). Therefore, the first outside member 46 is also rotated as a unit with the gear 4. The second outside member 48 is provided with an annular first member 50 and a second member 56 having a hollow cylindrical wall 52 and an end wall 54, and in the illustrated embodiment, mounted on the front end portion of the small-diameter portion 38 of the second inside member 30. In the illustrated embodiment, the front end part of the small-diameter portion 38 is serrated, and the end wall 54 of the second member 56 is forced into the serrated portion 55 to form an integral unit. An annular recess 57 is defined in the inner circumferential edge portion of the open end portion (the left end portion in Figures 1 and 2) of the hollow cylindrical wall 52 in the second member 56, and a pair of receiving recesses 58 are defined in opposite sites of the inner surface of the annular recess 57. On the other hand, a pair of outwardly projecting engaging protrusions 60 are provided at opposing sites on the outer circumferential surface of the first member 50, and the first member 50 is received in the annular recess 57 and the pair of receiving recesses 58. Accordingly, the second outside member 48 having the first member 50 and the second member 52 is mounted so as to rotate as a unit with the second inside member 30, and therefore with the shaft member 6. As shown in Figure 1, the first outside member 46 formed in the gear 4 extends toward the first member 50 of the second outside member 48, and the end surfaces of these two members are kept in contact or in proximity with each other as are the two inside members. The inside diameter of the cylindrical inner circumferential surface 61 of the first outside member 46 is substantially equal to the inside diameter of the cylindrical inner circumferential surface 63 of the first member 50 of the second outside member 48. If desired, the second outside member 48 may be directly mounted on the shaft member 6.

The armature assembly 12 is mounted on the base portion of the small-diameter portion 38 of the second inside member 30 and received in a space defined by the first member 50 and the second member 56 of the second outside member 48. The illustrated armature assembly 12 is comprised of an armature 62, a biasing spring member 64 and a supporting rotating member 66. The supporting rotating member 66 is formed of a short cylindrical material, and mounted rotatably on the small-diameter portion 38 of the second inside member 30. An annular flange 68 projecting to the right is provided integrally in the inner circumferential edge portion of one end portion (the right end portion in Figures 1 and 2) of the supporting rotating member 66. Preferably, the supporting rotating member 66 is formed of a light weight plastic material in order to increase the response characteristics of the spring clutch mechanism itself. The armature 62 is formed of an annular plate having an outside shape nearly corresponding to the end wall 54 of the second member 56 and disposed inwardly (on the left side in Figures 1 and 2) of the end wall 54. The armature 62 is mounted on the supporting rotating member 66 via the biasing spring member 64. The biasing spring member 64 is positioned at the annular flange 68 of the supporting rotating member 66, and its annular central portion 70 is fixed to the aforesaid one end surface of the rotating member 66 by a fixing plate 72. A plurality of (three in the illustrated embodiment) circumferentially spaced engaging protrusions are formed in the peripheral edge portion of the fixing plate 72 by bending part of this peripheral edge portion. On the other hand, a plurality of (three in the illustrated embodiment) through-holes corresponding respectively to the engaging protrusions are formed in the supporting rotating member 66. Hence, when the biasing spring member 64 and the fixing plate 72 are mounted on the supporting rotating member 66, the engaging protrusions of the fixing plate 72 project to the other side through the corresponding through-holes of the supporting rotating member 66. By deforming the projecting ends of the engaging protrusions as is required and brought into engagement with the other end portion of the supporting rotating member 66, the annular central portion 70 of the biasing spring member 64 is maintained fixed between the fixing plate 72 and the supporting rotating member 66 (Figure 1). The biasing spring member 64 has a plurality of (three in the illustrated embodiment) projecting portions 74 extending in a sickle shape outwardly from the annular central portion 70, and the free end portion of each of the projecting portions 74 is fixed to the armature 62 by a fixing member 76 such as a rivet. The biasing spring member 64 elastically biases the armature 62 in a direction away from the inner surface of the end wall 54 (functioning as a rotor to be described hereinafter) in the second member 56. The structure of the armature assembly 12 is substantially the same as the armature assemblies disclosed, for example, in Japanese Laid-Open Patent Publication No. 236930/1986.

The electromagnetic means 14 is disposed outwardly of the outside surface (the right surface in Figures 1 and 2) of the end wall 54 of the second member 56. The illustrated electromagnetic means 14 has a field core 78 and an electromagnetic coil 80 mounted on the field core 78, and the field core 78 is rotatably mounted on the front end portion of the small-diameter portion 7 via a sleeve member 82 (see Figure 1). A projecting portion 84 is provided on the outer circumferential surface of the field core 78, and an engaging recess 86 is formed in its projecting portion 84. On the other hand, an engaging protrusion 88 is provided in the supporting plates 16 by bending part of it, and the engaging protrusion 88 is engaged with the engaging recess 86 of the projecting portion 84 (Figure 1). Hence, the electromagnetic means 14 is not rotated by the rotation of the supporting shaft 6. In the illustrated embodiment, an engaging member 90 for preventing detachment of the electromagnetic means 14 and other elements from the shaft member 6 is engaged with the front end portion of the small diameter portion 7 of the shaft member 6.

In the illustrated embodiment, an annular protrusion 92 is provided in the outer circumferential edge portion of the end wall 54 in relation to the fact that the electromagnetic means 14 is provided outwardly of the end wall 54 of the second member 56. The annular protrusion 92 projects to the right so as to surround the left end portion in Figures 1 and 2 of the electromagnetic means 14. The provision of the annular protrusion 92 in the end wall 54 functioning as a rotor makes it possible to increase the magnetic attracting action of the electromagnetic means 14 and thereby improve the response characteristics of the spring clutch mechanism itself.

The illustrated spring clutch mechanism 2 further includes coil spring means 94. As shown in Figure 1, the coil spring means 94 is disposed between the inside transmission means 8 and the outside transmission means 10. The coil spring means 94 is fitted over the inside transmission means 8 inwardly of the outside transmission means 10, outwardly of the inside transmission means 8, extends astride the outer circumferential surfaces of the first inside member 28 and the second inside member 30 (more specifically, the large-diameter portion 36). Inwardly of the outside transmission means 10, the coil spring means 94 extends astride the inner circumferential surfaces of the first outside member 46 and the second outside member 48 (more specifically, the first member 50). One end 95 of the coil spring means 94 is connected to the rotating supporting member 66 by inserting it into a cut 96 formed in the other end portion of the rotating supporting member 66 (in the illustrated embodiment, either one of the circumferentially spaced cuts 96). The other end 97 of the coil spring means 94 is connected to the second outside member 46 by inserting it into a cut 98 formed in the second outside member 46 integral with the gear 4 (in the illustrated embodiment, either one of the circumferentially spaced cuts 98). As shown in Figure 2, the coil spring means 94 is wound from its one end 95 to its other end 97 in the right direction as viewed from the right side in Figures 1 and 2. In this winding direction, when a force to hamper the rotation of the supporting rotating member 66 acts on it during the rotation of the gear 4 in the direction of arrow 24 to produce a difference in rotating speed between the gear 4 and the supporting rotating member 66, the coil spring means 94 contracts; and when a force to hamper rotation of the supporting rotating member 66 acts on it during rotation of the gear 4 in the direction of arrow 26 to produce a difference in rotating speed between the two, the coil spring member 94 expands.

Now, with reference mainly to Figure 1, the operation and effect of the electromagnetically controlled spring clutch mechanism 2 will be described.

First, let us assume that by the action of a driving sequence (not shown), the gear 4 is rotating in a predetermined direction shown by arrow 24 (Figure 2). In this case, the rotating force of the gear 4 in the direction of arrow 24 is selectively transmitted to the shaft member 6 by the energization and deenergization of the electromagnetic means 14.

When the electromagnetic means 14 is energized during the rotation of the gear 4 in the direction of arrow 24, the armature 62 is moved to the right in Figure 1 toward the end wall 54 functioning as a rotor against the biasing action of the biasing spring member 64 and magnetically attracted to the inner surface of the end wall 54 of the second member 56 by the action of the electromagnetic means 14. It is not always necessary to attract the armature 62 to the end wall 54, and it is sufficient if the armature 62 is moved to such an extent as to create a difference in rotating speed between the gear 4 and the supporting rotating member 66. On the other hand, the gear 4 is rotated in the direction of arrow 24, and the armature assembly 12 (consisting of the supporting rotating member 66, the biasing spring member 64 and the armature 62) is rotated likewise via the coil spring means 94.

Hence, when the electromagnetic means 14 is energized and the armature 62 is magnetically attracted to the end wall 54 of the second member 56, a force to hamper rotation acts on the supporting rotating member 66. This rotation hampering force creates a difference in rotating speed between the gear 4 and the supporting rotating member 66, i.e., one end 95 of the coil spring means 14 and its other end 97, to contract the coil spring means 94. The coil spring means 94 is contracted by this speed difference as is required. When the coil spring means 94 is so contracted, the inner circumferential surface of the coil spring means 94 acts on the outer circumferential surfaces of the first inside member 28 and the large-diameter portion 36 of the second inside member 30 in the inside transmission means 8, and the first inside member 28 and the second inside member 30 are drivingly connected to each other via the coil spring means 94. As a result, the rotating force of the gear 4 in the direction of arrow 24 (Figure 2) is transmitted to the shaft member 6 via the first inside member 28, the coil spring means 94 and the second inside member 30 to rotate the shaft member 6 in the direction of arrow 24 incident to the rotation of the gear 4.

On the other hand, when the electromagnetic means 14 is deenergized, the armature 62 is moved to the left in Figure 1 by the elastic biasing action of the biasing spring member 64, and the above connection between the armature 62 and the end wall 54 of the second member 56 is cancelled (namely, the armature 62 is returned to the position shown in Figure 1 by the action of the biasing spring member 64). As a result, the elastic force of the coil spring means 94 which is created during transmission of the driving force as stated above causes the supporting rotating member 66 to rotate slightly further in the direction of arrow 24, and the coil spring means 94 is properly expanded. On expansion, the driving connection between the first inside member 28 and the second inside member 30 by the coil spring means 94 is cancelled to thereby stop the rotation of the shaft member 6 in the direction of arrow 24.

When the gear 4 is rotating in the direction of arrow 26 which is opposite to the predetermined direction described above by the action of a driving source (not shown), the rotating force of the gear 4 in the direction of arrow 26 is transmitted selectively to the shaft member 6 by the energization and deenergization of the electromagnetic means 14.

When the electromagnetic means 14 is energized during the rotation of the gear 4 in the direction of arrow 26, the armature 62 is moved to the right in Figure 1 toward the end wall 54 functioning as a rotor against the biasing action of the biasing spring member 64 and magnetically attracted to the inner surface of the end wall 54 of the second member 56 by the action of the electromagnetic means 14. At this time, the gear 4 is rotated in the direction of arrow 26, and the armature assembly 12 consisting of the supporting rotating member 66, the biasing spring member 64 and the armature 62 is rotated likewise via the coil spring means 94. Hence, when the electromagnetic means 14 is energized and the armature 62 is magnetically attracted to the end wall 54 of the second member 56, a force hampering the rotation of the supporting rotating member 66 acts on it. As a result, the rotation hampering force produces a difference in rotating speed between the gear 4 and the supporting rotating member 66, i.e., one end 95 of the coil spring means 14 and its other end 97, and this speed difference causes proper expansion of the coil spring means 94. On expansion, the outer circumferential surface of the coil spring means 94 acts on the inner circumferential surfaces of the first outside member 46 and the second outside member 48 (more specifically, the first member 50) in the outside transmission means 10, and the first outside member 46 and the second outside member 68 are drivingly connected to each other via the coil spring means 94. As a result, the rotating force of the gear 4 in the direction of arrow 26 is transmitted to the shaft member 6 via the first outside member 46, the second outside member 48 (i.e., the first member 50 and the second member 56) and the second inside member 30 to rotate the shaft member 6 in the direction of arrow 26 incident to the rotation of the gear 4.

On the other hand, when the electromagnetic means 14 is deenergized, the armature 62 is moved to the left in Figure 1 by the elastic biasing action of the biasing spring member 64, and the above connection between the armature 62 and the end wall 54 of the second member 56 is cancelled (namely, the armature 62 is returned to the position shown in Figure 1 by the action of the biasing spring member 64). As a result, the elastic force of the coil spring means 94 which is created during transmission of the driving force mentioned above further rotates the supporting rotating member 66 slightly, and properly contracts the coil spring means 94. Upon contraction, the driving connection between the first outside member 46 and the second outside member 48 by the coil spring means 94 is cancelled, and the rotation of the shaft member 6 in the direction of arrow 26 is stopped.

In the electromagnetically controlled spring clutch mechanism 2 described above, the driving force of the gear 4 in the direction of arrow 24 is transmitted to the shaft member 6 by utilizing the contraction of the coil spring means 94, and the driving force of the gear 4 in the direction of arrow 26 is transmitted to the shaft member 6 by utilizing the expansion of the coil spring means 94. Hence, the rotation of the gear 4 in the predetermined and reverse directions can be properly transmitted to the shaft member 6 by controlling the electromagnetic means 14. It will be readily seen that the structure of the spring clutch mechanism 2 itself can be simplified and the entire spring clutch mechanism 2 can be made compact.

When the coil spring means 94 in the electromagnetically controlled spring clutch mechanism 2 has an outside diameter of, for example 10 to 16 mm, excellent response characteristics can be obtained by setting the distance between the inner circumferential surface of the coil spring means 94 and the outer circumferential surfaces of the first inside member 28 and the large-diameter portion 36 of the second inside member 30 at about 0.075 mm (namely, the difference between the inside diameter of the coil spring means 94 and the outside diameter of the first inside member 28 and the large-diameter portion 36 of the second inside member 30 becomes about 0.15 mm) and the distance between the outer circumferential surface of the coil spring means 94 and the inner circumferential surface of the first outside member 46 and the first member 50 of the second outside member 48 at about 0.075 mm (namely, the difference between the outside diameter of the coil spring means 94 and the inside diameter of the first outside member 46 and the first member 50 of the second outside member 48 becomes about 0.15 mm). This preset distances may slightly vary depending upon the size of the coil spring means 94, etc.

The electromagnetically controlled spring clutch mechanism 2 may conveniently be applied to a massager machine.

While the present invention has been described hereinabove with reference to one specific embodiment of the electromagnetically controlled spring clutch mechanism constructed in accordance with this invention, it should be understood that the invention is not limited to such a specific embodiment, and various changes and modifications are possible without departing from the scope of the Claim 5.

In the illustrated embodiment, the end wall 54 of the second member 56 of the second outside member 48 acts as a rotor. Alternatively, a rotor may be separately disposed opposite to the armature.

**Claims**

1. An electromagnetically controlled spring clutch mechanism comprising a rotatably mounted output rotating element (6), and input rotating element (4) rotatable relative to the output rotating element (6), and a transmission means including a coil spring means (94) adapted to selectively connect the output and input rotating elements under the control of an electromagnetic means (14) which is adapted to produce a difference in rotating speed between one and the other end of the coil spring means (94), characterised in that

the input rotating element (4) is adapted to rotate in a predetermined direction and in a direction opposite to the predetermined direction,

the transmission means further includes inside transmission means (8) and outside transmission means (10) interposed between the input rotating element (4) and the output rotating element (6),

the inside transmission means (8) comprising a first inside member (28) adapted to rotate as a unit with the input rotating element (4) and a second inside member (30) adapted to rotate as a unit with the output rotating element (6),

the outside transmission means (10) comprising a first outside member (46) adapted to rotate as a unit with the input rotating element (4) and a second outside member (48) adapted to rotate as a unit with the output rotating element (6), and

the coil spring means (94) being disposed between the inside transmission means (8) and the outside transmission means (10) and extending astride the first and second inside members (28, 30) of the inside transmission means (8) outwardly of the outer circumferential surfaces of the first and second inside members (28, 30) and astride the first and second outside members (46, 48) of the outside transmission means inwardly of the inner circumferential surfaces of the first and second outside members (46, 48), wherein

when the electromagnetic means (14) is energized during the rotation of the input rotating element (4) in said predetermined direction, a difference in rotating speed in a direction to contract the coil spring means (94) is created between one end and the other end of the coil spring means to connect the first and second inside members (28, 30) drivingly via the coil spring means and thereby transmit the rotating force of the input rotating element (4) in said predetermined direction to the output rotating element (6) via the inside transmission means (8), and

when the electromagnetic means (14) is energized during rotation of the input rotating element (4) in said opposite direction, a difference in rotating speed is created between the one and the other end of the coil spring means (94) in a direction to expand the coil spring means (94) to connect the first and second outside members (46, 48) drivingly via the coil spring means (94) and thereby transmit the rotating force of the input rotating element (4) in said opposite direction to the output rotating element (6) via the outside transmission means (10).

2. An electromagnetically controlled spring clutch mechanism as claimed in claim 1, wherein each of the first and second inside members (28, 30) of the inside transmission means (8) has a cylindrical outer circumferential surface, and when contracted, the coil spring means (94) acts on the outer circumferential surfaces of the first and second inside members (28, 30) and drivingly connects the first and second inside members (28, 30) to each other.

3. An electromagnetically controlled spring clutch mechanism as claimed in claim 1, wherein each of the first and second outside members (46, 48) of the outside transmission means (10) has a cylindrical inner circumferential surface, and when expanded, the coil spring means acts on the inner circumferential surfaces of the first and second outside members (46, 48) and drivingly connects the first and second outside members to each other.

4. An electromagnetically controlled spring clutch mechanism as claimed in claim 1, wherein in relation to the electromagnetic means, a rotor adapted to rotate as a unit with the output rotating element (6) and an armature assembly (12) rotatable relative to the output rotating element (6) are provided; the armature assembly (12) comprises an armature (62) positioned opposite to one surface of the rotor, a supporting rotating member (66) mounted rotatably on the output rotating element (6) and a biasing spring member (64) interposed between the supporting rotating member (66) and the armature and adapted to bias the armature resiliently in a direction away from said one surface of the rotor; and when energized, the electromagnetic means magnetically attracts the armature to said one surface of the rotor.

5. An electromagnetically controlled spring clutch mechanism as claimed in claim 4, wherein the coil spring means is wound from its one end linked to the armature assembly to its other end linked to the input rotating element in such a direction that it is contracted when the electromagnetic means (14) is energized during the rotation of the input rotating element (4) in said predetermined direction, and it is expanded when the electromagnetic means (14) is energized during rotation of the input rotating element (4) in said opposite direction.

6. An electromagnetically controlled spring clutch mechanism as claimed in claim 4, wherein the rotor also constitutes part of the second outside member of the outside transmission means.

7. An electromagnetically controlled spring clutch mechanism as claimed in claim 4, wherein an annular protrusion projecting so as to surround the electromagnetic means is provided in the outer circumferential edge portion of the rotor.

**Patentansprüche**

1. Elektromagnetisch betätigbarer Federkupplungsmechanismus, umfassend ein drehbar angeordnetes Abtriebsdrehelement (6), ein relativ zum Abtriebsdrehelement (6) drehbares Antriebsdrehelement (4) und eine Kraftübertragungseinrichtung mit einer Schraubenfeder (94), die selektiv das Abtriebs- und das Abtriebsdrehelement unter Steuerung durch eine elektromagnetische Einrichtung (14) miteinander verbindet, wobei die elektromagnetische Einrichtung zwischen dem einen und dem anderen Ende der Schraubenfeder (94) eine Rotationsgeschwindigkeitsdifferenz erzeugen kann, dadurch gekennzeichnet,

daß das Antriebsdrehelement (4) in einer vorbestimmten Richtung und in einer dazu entgegengesetzten Richtung drehbar ist,

daß die Kraftübertragungseinrichtung ferner eine innere Kraftübertragungseinheit (8) und eine äußere Kraftübertragungseinheit (10) zwischen dem Antriebsdrehelement (4) und dem Abtriebsdrehelement (6) aufweist,

daß die innere Kraftübertragungseinheit (8) ein erstes inneres Teil (28), das mit dem Antriebsdrehelement (4) zusammen als Einheit drehbar ist, und ein zweites inneres Teil (30), das mit dem Abtriebsdrehelement (6) zusammen als Einheit drehbar ist, umfaßt,

daß die äußere Kraftübertragungseinheit (10) ein erstes äußeres Teil (46), das mit dem Antriebsdrehelement (4) zusammen als Einheit drehbar ist, und ein zweites äußeres Teil (48), das mit dem Abtriebsdrehelement (6) zusammen als Einheit drehbar ist, umfaßt, und

daß die Schraubenfeder (94) zwischen der inneren Kraftübertragungseinheit (8) und der äußeren Kraftübertragungseinheit (10) angeordnet ist und an dem ersten und zweiten inneren Teil (28, 30) der inneren Kraftübertragungseinheit (8) außerhalb der äußeren Umfangsflächen des ersten und des zweiten inneren Teils (28, 30) sitzend und an dem ersten und zweiten äußeren Teil (46, 48) der äußeren Kraftübertragungseinheit innerhalb der inneren Umfangsflächen des ersten und zweiten äußeren Teils (46, 48) sitzend verläuft, wobei,

wenn die elektromagnetische Einrichtung (14) während der Rotation des Antriebsdrehelements (4) in der vorbestimmten Richtung erregt wird, eine Rotationsgeschwindigkeitsdifferenz in einer eine Kontraktion der Schraubenfeder (94) bewirkenden Richtung zwischen dem einen und dem anderen Ende der Schraubenfeder erzeugt wird, um das erste und zweite innere Teil (28, 30) antriebsmäßig über die Schraubenfeder miteinander zu verbinden und dadurch die Drehkraft des Antriebsdrehelements (4) in der vorbestimmten Richtung auf das Abtriebsdrehelement (6) über die innere Kraftübertragungseinheit (8) zu übertragen, und

wenn die elektromagnetische Einrichtung (14) während der Rotation des Antriebsdrehelements (4) in der entgegengesetzten Richtung erregt wird, eine Rotationsgeschwindigkeitsdifferenz zwischen dem einen und dem anderen Ende der Schraubenfeder (94) in eine eine Ausdehnung der Schraubenfeder (94) bewirkenden Richtung erzeugt wird, um das erste und zweite äußere Teil (46, 48) antriebsmäßig über die Schraubenfeder (94) miteinander zu verbinden und dadurch die Drehkraft des Antriebsdrehelements (4) in der Gegenrichtung auf das Abtriebsdrehelement (6) über die äußere Kraftübertragungseinheit (10) zu übertragen.

2. Elektromagnetisch betätigbarer Federkupplungsmechanismus nach Anspruch 1, wobei das erste und das zweite innere Teil (28, 30) der inneren Kraftübertragungseinheit (8) jeweils eine zylindrische Außenumfangsfläche haben und die Schraubenfeder (94) im zusammengedrückten Zustand die Außenumfangsflächen des ersten und zweiten inneren Teils (28, 30) beaufschlagt und das erste und zweite innere Teil (28, 30) antriebsmäßig miteinander verbindet.

3. Elektromagnetisch betätigbarer Federkupplungsmechanismus nach Anspruch 1, wobei das erste und das zweite äußere Teil (46, 48) der äußeren Kraftübertragungseinheit (10) jeweils eine zylindrische Innenumfangsfläche haben und die Schraubenfeder im ausgedehnten Zustand die Innenumfangsflächen des ersten und zweiten äußeren Teils (46, 48) beaufschalgt und das erste und zweite äußere Teil antriebsmäßig miteinander verbindet.

4. Elektromagnetisch betätigbarer Federkupplungsmechanismus nach Anspruch 1, wobei zum Zusammenwirken mit der elektromagnetischen Einrichtung ein Rotor, der zur Rotation als Einheit mit dem Abtriebsdrehelement (6) ausgebildet ist, und eine relativ zum Abtriebsdrehelement (6) drehbare Ankereinrichtung (12) vorgesehen sind; die Ankereinrichtung (12) umfaßt: einen Anker (62), der einer Oberfläche des Rotors gegenüberstehend positioniert ist, ein tragendes Rotationsteil (66), das auf dem Abtriesbdrehelement (6) drehbar angeordnet ist, und ein zwischen dem trangenden Rotationsteil (66) und dem Anker angeordnetes Vorspannfederelement (64), das den Anker in einer von der einen Oberfläche des Rotors wegführenden Richtung federnd vorspannt; und wobei im erregten Zustand die elektromagnetische Einrichtung den Anker magnetisch an die eine Oberfläche des Rotors anzieht.

5. Elektromagnetisch betätigbarer Federkupplungsmechanismus nach Anspruch 4, wobei die Schraubenfeder von ihrem einen Ende, das an der Ankereinrichtung befestigt ist, zu ihrem anderen Ende, das an dem Antriebsdrehelement befestift ist, in einer solchen Richtung gewickelt ist, daß sie zusammengedrückt wird, wenn die elektromagnetische Einrichtung (14) während der Rotation des Antriebsdrehelements (4) in der vorbestimmten Richtung erregt wird, und ausgedehnt wird, wenn die elektromagnetische Einrichtung (14) während der Rotation des Antriebsdrehelement (4) in die Gegenrichtung erregt wird.

6. Elektromagnetisch betätigbarer Federkupplungsmechanismus nach Anspruch 4, wobei der Rotor ferner einen Teil des zweiten äußeren Teils der äußeren Kraftübertragungseinheit bildet.

7. Elektromagnetisch betätigbarer Federkupplungsmechanismus nach Anspruch 4, wobei im äußeren Umfangsrandbereich des Rotors ein ringförmiger Vorsprung vorgesehen ist, der so vorsteht, daß er die elektromagnetische Einrichtung umgibt.

**Revendications**

1. Un mécanisme d'embrayage à ressort à commande électromagnétique comprenant un élément rotatif de sortie (6) monté rotatif, un élément rotatif d'entrée (4) rotatif par rapport à l'élément rotatif de sortie (6), et des moyens de transmission comprenant un ressort hélicoïdal (94) agencé pour connecter sélectivement les éléments rotatifs de sortie et d'entrée sous la commande d'un moyen électromagnétique (14) qui est agencé pour produire une différence de vitesses de rotation entre l'une et l'autre extrémités du ressort hélicoïdal (94), caractérisé en ce que

l'élément rotatif d'entrée (4) est agencé pour tourner dans une direction prédéterminée et dans une direction opposée à la direction prédéterminée,

les moyens de transmission comprennent en outre des moyens de transmission intérieurs (8) et des moyens de transmission extérieurs (10) interposés entre l'élément rotatif d'entrée (4) et l'élément rotatif de sortie (6),

les moyens de transmission intérieurs (8) comprenant un premier organe intérieur (28) agencé pour tourner d'une seule pièce avec l'élément rotatif d'entrée (4) et un second organe intérieur (30) agencé pour tourner d'une seule pièce avec l'élément rotatif de sortie (6),

les moyens de transmission extérieurs (10) comprenant un premier organe extérieur (46) agencé pour tourner d'une seule pièce avec l'élément rotatif d'entrée (4) et un second organe extérieur (48) agencé pour tourner d'une seule pièce avec l'élément rotatif de sortie (6), et

le ressort hélicoïdal (94) étant disposé entre les moyens de transmission intérieurs (8) et les moyens de transmission extérieurs (10) et s'étendant à cheval sur des premier et second organes intérieurs (28, 30) des moyens de transmission intérieurs (8) vers l'extérieur des surfaces circonférentielles extérieures des premier et second éléments intérieurs (28, 30), et à cheval sur les premier et second éléments de transmission extérieurs (46, 48) des moyens de transmission extérieurs vers l'intérieur des surfaces circonférentielles intérieures des premier et second organes extérieurs (46, 48), dans lequel

lorsque le moyen électromagnétique (14) est alimenté pendant la rotation de l'élément rotatif d'entrée (4) dans ladite direction prédéterminée, une différence de vitesses de rotation dans une direction tendant à contracter le ressort hélicoïdal (94) est créée entre une extrémité et l'autre extrémité du ressort hélicoïdal afin de connecter à entraînement les premier et second organes intérieurs (28, 30) par l'intermédiaire du ressort hélicoïdal et transmettre de ce fait la force de rotation de l'élément rotatif d'entrée (4) dans ladite direction prédéterminée à l'élément rotatif de sortie (6) par l'intermédiaire des moyens intérieurs de transmission (8), et

lorsque le moyen électromagnétique (14) est alimenté pendant la rotation de l'élément rotatif d'entrée (4) dans ladite position opposée, une différence de vitesses de rotation est créée entre l'une et l'autre extrémités du ressort hélicoïdal (94) dans une direction tendant à dilater le ressort hélicoïdal (94) afin de connecter à entraînement les premier et second organes extérieurs (46, 48) par l'intermédiaire du ressort hélicoïdal (94) et transmettre de ce fait la force de rotation de l'élément rotatif d'entrée (4) dans ladite direction opposée à l'élément rotatif de sortie (6) par l'intermédiaire des moyens de transmission extérieurs (10).

2. Un mécanisme d'embrayage à ressort à commande électromagnétique tel que revendiqué à la revendication 1, dans lequel chacun des premier et second organes intérieurs (28, 30) des moyens de transmission intérieurs (8) a une surface circonférentielle extérieure cylindrique et, lorsqu'il est contracté, le ressort hélicoïdal (94) agit sur les surfaces circonférentielles extérieures des premier et second organes intérieurs (28, 30) et connecte à entraînement les premier et second organes intérieurs (28, 30) l'un à l'autre.

3. Un mécanisme d'embrayage à ressort à commande électromagnétique tel que revendiquè à la revendication 1, dans lequel chacun des premier et second organes extérieurs (46, 48) des moyens de transmission extérieurs (10) a une surface circonférentielle intérieure cylindrique et, lorsqu'il est dilaté, le ressort hélicoïdal agit sur les surfaces circonférentielles intérieures des premier et second organes extérieurs (46, 48) et connecte à entraînement les premier et second organes extérieurs l'un à l'autre.

4. Un mécanisme d'embrayage à ressort à commande électromagnétique tel que revendiqué à la revendication 1, dans lequel, sont prévus en relation avec le moyen électromagnétique, un rotor agencé pour tourner d'une seule pièce avec l'élément rotatif de sortie (6) et un ensemble d'armature (12) pouvant tourner par rapport à l'élément rotatif de sortie (6); l'ensemble d'armature (12) comprend une armature (62) positionnée à l'opposé d'une surface du rotor, un organe de support rotatif (66) monté à rotation sur l'élément rotatif de sortie (6) et un ressort de rappel (64) interposé entre l'organe de support rotatif (66) et l'armature et agencé pour rappeler élastiquement l'armature dans une direction s'écartant de ladite une surface du rotor; et lorsqu'il est alimenté, le moyen électromagnétique attire l'armature sur ladite une surface du rotor.

5. Un mécanisme d'embrayage à ressort à commande électromagnétique tel que revendiqué à la revendication 4, dans lequel le ressort hélicoïdal est enroulé depuis une de ses extrémités reliée à l'ensemble d'armature jusqu'à son autre extrémité reliée à l'élément rotatif d'entrée dans une direction telle qu'il est contracté lorsque le moyen électromagnétique (14) est alimenté pendant la rotation de l'organe rotatif d'entrée (4) dans ladite direction prédéterminée, et il est dilaté lorsque le moyen électromagnétique (14) est alimenté pendant la rotation de l'élément rotatif d'entrée (4) dans ladite direction opposée.

6. Un mécanisme d'embrayage à ressort à commande électromagnétique tel que revendiqué à la revendication 4, dans lequel le rotor constitue également une partie de l'organe rotatif de sortie des moyens de transmission extérieurs.

7. Un mécanisme d'embrayage à ressort à commande électromagnétique tel que revendiqué à la revendication 4, dans lequel une saillie annulaire faisant saillie de manière à entourer le moyen électromagnétique est prévue dans la portion de bord circonférentielle extérieure du rotor.

FIG. 1

1

FIG. 2